(19) Europäisches Patentamt
European Patent Office
Office européen des brevets

(11) EP 4 559 674 A1

(12) # EUROPEAN PATENT APPLICATION
published in accordance with Art. 153(4) EPC

(43) Date of publication:
**28.05.2025 Bulletin 2025/22**

(21) Application number: **23831654.1**

(22) Date of filing: **03.07.2023**

(51) International Patent Classification (IPC):
***B32B 27/00** (2006.01)* ***B32B 7/022** (2019.01)*
***B32B 27/32** (2006.01)* ***C09J 7/24** (2018.01)*

(52) Cooperative Patent Classification (CPC):
**B32B 7/022; B32B 27/00; B32B 27/32; C09J 7/24**

(86) International application number:
**PCT/JP2023/024571**

(87) International publication number:
**WO 2024/005215 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 JP 2022106970**

(71) Applicant: **Dai Nippon Printing Co., Ltd.**
**Tokyo 162-8001 (JP)**

(72) Inventors:
- **TSUZUKI, Atsuo**
  **Tokyo 162-8001 (JP)**
- **SHIRAHIGE, Yasushi**
  **Tokyo 162-8001 (JP)**
- **KATOU, Shuma**
  **Tokyo 162-8001 (JP)**
- **SAEKI, Kosuke**
  **Tokyo 162-8001 (JP)**
- **NAKAHARA, Atsushi**
  **Tokyo 162-8001 (JP)**
- **TOMINAGA, Nobuyuki**
  **Tokyo 162-8001 (JP)**
- **FUKUDA, Masaharu**
  **Tokyo 162-8001 (JP)**
- **AKITA, Yasuhiro**
  **Tokyo 162-8001 (JP)**
- **MIYAZAKI, Saori**
  **Tokyo 162-8001 (JP)**
- **KAWASAKI, Keishi**
  **Tokyo 162-8001 (JP)**

(74) Representative: **Müller-Boré & Partner Patentanwälte PartG mbB**
**Friedenheimer Brücke 21**
**80639 München (DE)**

(54) **PROTECTIVE FILM AND STRUCTURE**

(57) The present disclosure provides a film including a protective layer including a polyolefin-based resin, and an adhesive layer disposed on one surface of the protective layer, wherein a value resulting from dividing a tensile load obtained when the film is elongated by 10% by an elongation obtained when the film is elongated by 10% is 3.0 N/mm or less.

FIG. 1

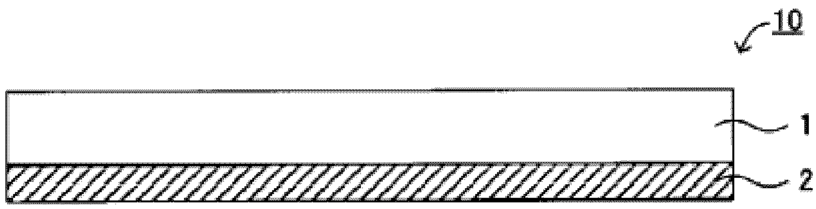




Processed by Luminess, 75001 PARIS (FR)

## Description

### Technical Field

The present disclosure relates to a protective film and a structure.

### Background Art

Structures set up outdoor and structures used outdoor are exposed to an ultraviolet ray by sunlight, wind, rain, snow, hail, hailstone, thunder, sea water, gas, sand, dirt, dust, and the likes. Also, the structures may be affected by collision of birds and flying objects. In this manner, since the structures are under strict environment, problems such as damage, formation change, surface contamination, and surface peeling occur in the usage for a long period of time.

Then, for protection of the structures, a technique of adhering a protective film on a surface of the structure has been suggested. For example, Patent Document 1 discloses a protective film to be used for a car exterior and the like. Also, Patent Document 2 discloses a protective film to be used for a windmill blade of a wind energy conversion system.

### Citation List

### Patent Documents

Patent Document 1: Japanese Patent Application Laid-Open (JP-A) No. 2010-260942
Patent Document 2: WO Publication No. 2012/102294

### Summary

### Technical Problem

Since structures have various solid shapes, it is desired for the protective film to be capable of being adhered in accordance with the various surface shapes.

Patent Document 1 discloses a protective film comprising a polyurethane-based resin, of which tensile breaking elongation at 80°C is 120% or more, and/or of which gloss retention after two years of outdoor exposure is 80% or more. Such a protective film is capable of being adhered in accordance with various surface shapes, and excellent in, for example, following capability for various surface shapes such as a curved shape, and durability after the adhesion.

However, aging degradation easily occurs in the polyurethane-based resin. For this reason, there is a problem that properties of the protective film comprising the polyurethane-based resin are degraded due to the aging degradation.

The present disclosure has been made in view of the above circumstances, and a main object thereof is to provide a protective film of which following capability to various surface shapes such as curved surfaces, concave and convex is well, and aging degradation does not easily occur.

### Solution to Problem

One embodiment of the present disclosure provides a protective film including a protective layer including a polyolefin-based resin, and an adhesive layer disposed on one surface of the protective layer, wherein a value resulting from dividing a tensile load obtained when the film is elongated by 10% by an elongation obtained when the film is elongated by 10% is 3.0 N/mm or less.

Another embodiment of the present disclosure provides a structure including the above described protective film.

### Advantageous Effects

The present disclosure exhibits an effect of providing a protective film, of which following capability to various surface shapes such as curved surfaces, concave and convex is well, and aging degradation does not easily occur.

### Brief Description of Drawings

FIG. 1 is a schematic cross-sectional view exemplifying a protective film in the present disclosure.
FIG. 2 is a schematic cross-sectional view exemplifying a protective film in the present disclosure.

Description of Embodiments

Embodiments in the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the invention such as width, thickness, and shape of each part schematically in order to explain the invention more clearly in some cases comparing to the actual form; however, it is merely an example, and thus should not limit the interpretation of the present disclosure. Also, in the present description and each drawing, for the factor same as that described in the figure already explained, the same reference sign is indicated and the explanation thereof may be omitted.
In the present descriptions, in expressing an aspect wherein some member is placed on the other member, when described as merely "on" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface side" or "on the surface", unless otherwise stated, it includes both of the following cases: a case wherein some member is placed directly on or directly below the other member so as to be in contact with the other member, and a case wherein some member is placed on the upper side or the lower side of the other member via yet another member.
Also, in the present specification, a member referred to as "sheet" is included in "film".
The protective film and the structure in the present disclosure will be hereinafter explained in details.

A. Protective film

The protective film in the present disclosure includes a protective layer including a polyolefin-based resin, and an adhesive layer disposed on one surface of the protective layer, wherein a value resulting from dividing a tensile load obtained when the film is elongated by 10% by an elongation obtained when the film is elongated by 10% is 3.0 N/mm or less.
Note that, in the present specification, for ease of explanation, "a value resulting from dividing a tensile load obtained when the film is elongated by 10% by an elongation obtained when the film is elongated by 10%" may be simply referred to as "spring constant at 10% elongation".
FIG. 1 is a schematic cross-sectional view exemplifying the protective film in the present disclosure. The protective film 10 in FIG. 1 includes a protective layer 1 including a polyolefin-based resin, and adhesive layer 2 disposed on one surface of the protective layer 1. The spring constant at 10% elongation of the protective film 10 is the specified value or less.
Here, as a conventional protective film, as described in Patent Document 1, usage of the polyurethane-based resin has been known. However, the polyurethane-based resin tends to be gradually decomposed along with the usage for a long period of time, and there is a possibility that properties of the protective film may be degraded due to aging degradation. In the present disclosure, such a problem can be inhibited since a polyolefin-based resin is used for a protective layer in the protective film. Also, the inventors of the present disclosure have studied and found out that, as described in the section of Examples later, aging degradation does not easily occur (or hereinafter referred to as excellent durability is achieved) in the protective film including the protective layer including the polyolefin-based resin, compared to the protective film including the protective layer including the polyurethane-based resin.
Also, in the present disclosure, the spring constant at 10% elongation of the protective film is the specified value or less, and thus the flexibility of the protective film is well. As a result, following capability to curved surface, concave and convex can be improved.
Thus, since the protective film in the present disclosure has excellent following capability to curved surfaces, concave and convex, and excellent durability, it is suitable as a protective film to be used for structures set up outdoor and structures used outdoor.
Also, depending on the structure, it is important to inspect it regularly and, if necessary, perform maintenance such as repairs and part replacement. In the present disclosure, since the flexibility of the protective film is well, not only the workability when adhering the protective film on a surface of the structure, but also the workability when peeling off the protective film from the surface of the structure at the time of replacing the protective film can also be well. Further, in the present disclosure, since the durability of the protective film is well, peeling failure due to deterioration of the protective film can be inhibited.
Each constitution of the protective film in the present disclosure will be hereinafter explained.

1. Properties of protective film

(1) Spring constant at 10% elongation

In the protective film in the present disclosure, the spring constant at 10% elongation is 3.0 N/mm or less, preferably 0.1 N/mm or more and 2.5 N/mm or less, and further preferably 0.5 N/mm or more and 1.5 N/mm or less. When the spring constant of the protective film is the specified value or less, the following capability to curved surfaces, concave and convex can be improved. Meanwhile, when the spring constant of the protective film is too small, it will be too soft and there is a possibility that the handling of the protective film may be difficult.
Here, the spring constant is a value resulting from dividing a tensile load (N) by an elongation (mm). The spring constant at 10% elongation is a value resulting from dividing a tensile load (N) obtained when the film is elongated by 10%, by an elongation (mm) obtained when the film is elongated by 10%. In the later described tensile test, when the distance between chucks is 100 mm, the elongation when the film is elongated by 10% is 10 mm. Thus, the spring constant at 10% elongation is a value resulting from dividing a tensile load (N) when the film is elongated by 10%, by an elongation (10 mm) when the film is elongated by 10%.
The spring constant is obtained by performing a tensile test in accordance with ISO 527-3:2018, and measuring the tensile load and the elongation. Specific measurement conditions for the tensile test are shown as below. As a tensile tester, for example, "Tensilon RTF1150" from A & D Company Limited can be used.

<Measurement conditions for tensile test>

- Test piece: Rectangular shape
- Test piece size: 10 mm width, 120 mm length
- Distance between chucks: 100 mm
- Tensile speed: 50 mm/min
- Measurement temperature: 25°C

Also, when the protective film includes a separator, the spring constant refers to the spring constant of the protective film excluding the separator.

(2) Tensile breaking stress

In the protective film in the present disclosure, the maintenance factor of the tensile breaking stress after the light resistance test below is preferably 18% or more, more preferably 19% or more, and further preferably 20% or more. Also, the maintenance factor of the tensile breaking stress may be 60% or more, may be 70% or more, and may be 80% or more. When the maintenance factor of the tensile breaking stress is in the above range, the durability of the protective film can be improved. In the above range, the peeling failure of the protective film due to deterioration can be inhibited, and the workability at the time of peeling the protective film will be well.

<Light resistance test>

In the light resistance test, an ultraviolet ray with a wavelength of 300 nm or more and 400 nm or less is irradiated at an irradiance of 1000 $W/m^2$ and a black panel temperature of 63°C for 240 hours. When the protective film includes a separator, the light resistance test is performed after peeling off the separator, and bonding an ETFE (ethylene-tetrafluoroethylene copolymer) film having a thickness of 75 $\mu$m on the adhesive layer side surface. Also, in the light resistance test, the ultraviolet ray is irradiated from the protective layer side surface of the protective film. As a light source, a metal halide lamp can be used. It should be noted that, since 240 hours of the light resistance test is considered to be equivalent to 10 years of outdoor exposure, the irradiation time is set to 240 hours.
The maintenance factor of the tensile breaking stress after the light resistance test is calculated from the below equation (1).

Maintenance factor of tensile breaking stress after light resistance test (%)

= Tensile breaking stress after light resistance test / Tensile breaking stress before light resistance test * 100 (1)

In the protective film in the present disclosure, the maintenance factor of the tensile breaking stress after the below high temperature high humidity test below is preferably 35% or more, more preferably 37% or more, further preferably 40% or more, and particularly preferably 70% or more. When the maintenance factor of the tensile breaking stress is in the above range, the durability of the protective film can be improved. In the above range, the peeling failure of the protective film due to deterioration can be inhibited, and the workability at the time of peeling the protective film will be well.

<High temperature high humidity test>

In the high temperature high humidity test, the film is kept at a temperature of 85°C and a humidity of 85%RH for 2000 hours. When the protective film includes a separator, the high temperature high humidity test is performed after peeling off the separator, and bonding an ETFE (ethylene-tetrafluoroethylene copolymer) film having a thickness of 75 μm on the adhesive layer side surface.

The maintenance factor of the tensile breaking stress after the high temperature high humidity test is calculated by the below equation (2).

Maintenance factor of tensile breaking stress after high temperature high humidity test (%)

= Tensile breaking stress after high temperature high humidity test / tensile breaking stress before high temperature high humidity test * 100 (2)

In the protective film in the present disclosure, initial tensile breaking stress, that is the tensile breaking stress before the test is, for example, preferably 10 MPa or more and 40 MPa or less, more preferably 13 MPa or more and 40 MPa or less, and further preferably 15 MPa or more and 40 MPa or less. If the tensile breaking stress is too large, the protective film is not easily elongated, and there is a possibility that the following capability to curved surfaces, concave and convex may be degraded. Also, when the tensile breaking stress is too small, there is a possibility that the strength and the durability may be degraded.

Note that the tensile breaking stress of the protective film refers to a tensile breaking stress in MD direction.

Also, the MD direction refers to a flow direction at the time of forming the protective layer, and TD direction refers to a direction vertical to the MD direction. For example, when the protective film is a long shape, the MD direction designates the length direction of the protective film, and the TD direction designates the width direction of the protective film.

Here, the tensile breaking stress can be measured in accordance with ISO 527-3:2018. Specific measurement conditions are shown below. As a tensile tester, for example, "Tensilon RTF1150" from A & D Company Limited can be used.

<Measurement conditions>

- Test piece: Rectangular shape
- Test piece size: 10 mm width, 50 mm length
- Distance between chucks: 30 mm

- Tensile speed: 50 mm/min
- Measurement temperature: 25°C

Also, when the protective film includes a separator, the tensile breaking stress refers to the tensile breaking stress of the protective film excluding the separator. Before the light resistance test or before the high temperature high humidity test, the tensile test is performed after peeling off the separator from the protective film. Also, after the light resistance test or after the high temperature high humidity test, the tensile test is performed after peeling off the ETFE film.

(3) Yellowing degree

In the protective film in the present disclosure, a yellowing degree (ΔYI) after the light resistance test is preferably 10 or less, more preferably 8 or less, and further preferably 5 or less. Here, as described above, depending on the structure, it is important to inspect it regularly and, if necessary, perform maintenance such as repairs and part replacement. When the ΔYI is in the above range, transparency of the protective film can be maintained. As a result, the surface of the structure can be confirmed through the protective film visually, and thus the replacement timing of the protective film can be easily judged.
Note that, since the polyurethane-based resin is easily yellowed, the ΔYI tends to be large in the protective film using the conventional polyurethane-based resin. For this reason, it may be difficult to visually confirm the surface of the structure through the protective film.
The ΔYI after the light resistance test is obtained from the below equation (5).

$$\Delta YI \text{ after the light resistance test} = \text{Yellow degree } (YI_1) \text{ after light resistance test} - \text{yellow degree } (YI_0) \text{ before light resistance test} \quad (5)$$

Also, in the protective film in the present disclosure, the yellowing degree (ΔYI) after the high temperature high humidity test is preferably 10 or less, more preferably 8 or less, and further preferably 5 or less. When the ΔYI is in the above range, transparency of the protective film can be maintained. As a result, the surface of the structure can be confirmed through the protective film visually, and thus the replacement timing of the protective film can be easily judged.
The ΔYI after the high temperature high humidity test is obtained from the below equation (6).

$$\Delta YI \text{ after the high temperature high humidity test} = \text{Yellow degree } (YI_2) \text{ after high temperature high humidity test} - \text{yellow degree } (YI_0) \text{ before high temperature high humidity test} \quad (6)$$

Also, in the protective film in the present disclosure, the yellow degree after the test is respectively, for example, preferably 15 or less, more preferably 8 or less, and further preferably 5 or less. When the yellow degree after the test is in the above range, transparency of the protective film can be maintained after the test. As a result, the surface of the structure can be confirmed through the protective film visually, and thus the replacement timing of the protective film can be easily judged.
Here, the yellow degree of the protective film can be obtained by a stimulus value direct reading method in accordance with ISO 17223:2014. Specific measurement conditions are shown below. As a colorimeter, for example, "CC-i" from Suga Test Instruments Co., Ltd. can be used.

<Measurement conditions>

- Light source: C light source
- Visual field: 2°

Also, when the protective film includes a separator, the yellow degree refers to the yellow degree of the protective film excluding the separator. Before the light resistance test or before the high temperature high humidity test, the yellowing degree is measured after peeling off the separator from the protective film. Also, after the light resistance test or after the high temperature high humidity test, the yellow degree is measured after peeling off the ETFE film.

(4) Overall transmittance

In the present disclosure, the overall transmittance of the protective film is, for example, preferably 80% or more, more preferably 83% or more, and further preferably 85% or more. When the overall transmittance is in the above range, the transparency is well.
Here, the overall transmittance can be measured in accordance with ISO 13468-1: 1996.

2. Protective layer

The protective layer in the present disclosure is a member containing a polyolefin-based resin. Note that a most suitable protective layer is a member of which constituent excluding additives is 100% polyolefin-based resin.

(1) Material of protective layer

(a) Polyolefin-based resin

Examples of the polyolefin-based resin may include a polyethylene-based resin, and a polypropylene-based resin. Among them, the polyethylene-based resin is preferable.
The polyethylene-based resin includes not only usual polyethylene obtained by polymerizing ethylene, but also a copolymer of ethylene and $\alpha$-olefin. The $\alpha$-olefin is preferably $\alpha$-olefin with 3 or more and 12 or less carbons. Specific examples thereof may include propylene, 1-butene, 1-pentene, 1-hexene, 1-octene, 1-heptene, 4-methyl-pentene-1, 4-methyl-hexene-1, and 4,4-dimethylpentene-1. The $\alpha$-olefin may be used in one kind alone, and two kinds or more may be used in combination. Above all, $\alpha$-olefin not including branch is preferable, and $\alpha$-olefin with 3 or more and 8 or less carbons not including branch is more preferable. Specific examples thereof may include 1-propene, 1-butene, 1-pentene, 1-hexene, 1-heptene, and 1-octene. When the carbon number of the $\alpha$-olefin is 3 or more and 8 or less, preferable flexibility can be imparted, and also, preferable strength can be imparted.
Specific examples of the copolymer of ethylene and $\alpha$-olefin may include an ethylene-propylene copolymer, an ethylene-1-butene copolymer, an ethylene-1-hexene copolymer, an ethylene-1-octene copolymer, and an ethylene-4-methyl-penene-1 copolymer.
Examples of the polyethylene-based resin may include high density polyethylene (HDPE), low density polyethylene (LDPE), linear low density polyethylene (LLDPE), metallocene-based linear low density polyethylene (M-LLDPE), and very low density polyethylene (VLDPE). The polyethylene-based resin may be used in one kind alone, and two kinds or more may be used in combination.
Among those, for excellent flexibility, transparency, and processability, low density polyethylene (LDPE), linear low density polyethylene (LLDPE), metallocene-based linear low density polyethylene (M-LLDPE), and very low density polyethylene (VLDPE) are preferable.
The metallocene-based linear low density polyethylene (M-LLDPE) is synthesized by using a metallocene catalyst that is a single site catalyst. In such a polyethylene, there is little branches in the side chain, and the distribution of comonomer is uniform. For this reason, molecular weight distribution is narrow, and it is possible to decrease the density, and thus can impart flexibility and strength. Also, crystallinity distribution is narrow and crystal sizes are the same, so that not only there is no large crystal size, but the crystallinity itself is low for its low density. Thus, it is excellent in transparency.
The lower limit value of the density of the polyethylene-based resin is not particularly limited, and for example, it is preferably 0.870 g/cm$^3$ or more. The upper limit value of the density of the polyethylene-based resin is not particularly limited, and for example, it is preferably 0.930 g/cm$^3$ or less, more preferably 0.925 g/cm$^3$ or less, and further preferably 0.920 g/cm$^3$ or less. When the density of the polyethylene-based resin is in the above range, flexibility, transparency, and processability can be improved.
Here, the density of the polyethylene-based resin can be measured by, for example, a pycnometer method in accordance with ISO 1183:2019.
The lower limit value of the melting point of the polyethylene-based resin is not particularly limited, but for example, preferably 50°C or more. The upper limit value of the melting point of the polyethylene-based resin is not particularly limited, but for example, preferably 135°C or less, more preferably 130°C or less, and further preferably 125°C or less. If the melting point of the polyethylene-based resin is too high, since it is necessary to raise the heating temperature at the time of formation, there is a risk that the production cost increases. Meanwhile, if the melting point of the

polyethylene-based resin is too low, there is a risk of melting in the use environment.

Here, in the present specification, the melting point of resins can be obtained by performing a differential scanning calorimetry (DSC) in accordance with ISO 3146:2000. Note that, on that occasion, if there are two or more melting point peaks, the higher temperature is regarded as the melting point.

The melt mass flow rate (MFR) of the polyethylene-based resin at a temperature of 190°C is, for example, preferably 1g/10 min or more and 30g/10 min or less, more preferably 1g/10 min or more and 25g/10 min or less, and further preferably 1g/10 min or more and 20g/10 min or less. When the MFR of the polyethylene-based resin is the specified value or less, the strength can be improved. Also, when the MFR of the polyethylene-based resin is in the above range, formability and flexibility can be improved.

Here, the melt mass flow rate (MFR) of the polyethylene-based resin can be measured in accordance with ISO 1133-1:2011. The measurement conditions are A method, temperature of 190°C, and load of 2.16 kg.

Also, the polyolefin-based resin may be a cross-linked polyolefin-based resin, and may be a non-cross-linked polyolefin-based resin. Also, the polyethylene-based resin may be a cross-linked polyethylene-based resin, and may be a non-cross-linked polyethylene-based resin. The effect of the present invention is exhibited with the cross-linked type and the non-cross-linked (thermoplastic) type.

Note that the cross-linked polyolefin-based resin refers to a cross-linked polyolefin-based resin, that is a polyolefin-based resin having a cross-linking bond. On the other hand, the non-cross-linked polyolefin-based resin refers to a polyolefin-based resin that is not cross-linked. The cross-linking bond can be judged by a gel fraction measurement.

Also, the cross-linked polyethylene-based resin refers to a cross-linked polyethylene-based resin, that is a polyethylene-based resin having a cross-linking bond. On the other hand, the non-cross-linked polyethylene-based resin refers to a polyethylene-based resin that is not cross-linked.

As the cross-linking method for cross-linking the polyolefin-based resin, general cross-linking methods can be used, and examples thereof may include a cross-linking method by a cross-linking agent, and a cross-linking method by an ionizing radiation irradiation. Among those, the cross-linking method by a cross-linking agent is preferable.

As the cross-linking agent, general cross-linking agents can be used, and examples thereof may include an organic peroxide. Examples of the organic peroxide may include peroxy carbonates, peroxy ketals, and dialkyl peroxides. Examples of the peroxy carbonates may include t-amil-peroxy-2-ethylhexylcarbonate, and t-butylperoxy2-ethylhexylcarbonate. Examples of the peroxy ketals may include n-buty14,4-di(t-butylperoxy)valerate, ethyl3,3-di(t-butylperoxy) butylate, and 2,2-di(t-butylperoxy)butane. Examples of the dialkyl peroxides may include di-t-butylperoxide, t-butylcumylperoxide, dicumylperoxide, 2,5-dimethyl-2,5-di(t-butylperoxy)hexane, and 2,5-dimethyl-2,5-di(t-peroxy)hexyne-3. The cross-linking agent may be used in one kind alone, and two kinds or more may be mixed and used.

In the resin composition used for forming the protective layer, the content of the cross-linking agent is appropriately selected according to factors such as the intended cross-linking degree.

Also, in the cross-linking method by a cross-linking agent, a cross-linking aid may be used. Usage of the cross-linking aid can promote suitable cross-linking reaction. Further, since the cross-linking aid decreases the crystallinity of the polyolefin-based resin, transparency can be maintained. As the cross-linking aid, general cross-linking aids can be used, and examples thereof may include a polyfunctional monomer including a polymerizable functional group.

Above all, from the viewpoint of improving the reactivity, the cross-linking aid is preferably a nurate ring-containing compound including two or more of polymerizable functional groups in one molecule.

In the cross-linking aid, the number of the polymerizable functional group is, for example, as the lower limit value, it is preferably two pieces or more in one molecule. Meanwhile, as the upper limit value, it is preferably six pieces or less in one molecule, and more preferably three pieces or less. If the number of the polymerizable functional group is too little, there is a possibility that the cross-linking density may not be sufficiently increased. Meanwhile, if the number of the polymerizable functional group is too much, there is a possibility that the properties of the protective layer may be adversely affected such that the protective layer after the cross-linking treatment may be brittle.

The polymerizable functional group is not particularly limited if it reacts with the polyolefin-based resin that is a base resin, and imparts the cross-linking structure, but above all, groups such as a group including a carbon - carbon double bond, and an epoxy group are preferable. Examples of the group including the carbon - carbon double bond may include a vinyl group, a (meth)acryloyl group, a (meth)acryloyloxy group, and an allyl group.

Examples of the cross-linking aid may include a polyallyl compound, poly(meth)acryloxy compound, and an epoxy-based compound. Examples of the polyallyl compound may include triallyl isocyanurate (TAIC), triallyl cyanurate, diallyl phthalate, diallyl fumarate, and diallyl maleate. Examples of the poly(meth)acryloxy compound may include trimethylolpropane trimethacrylate (TMPT), trimethylolpropane triacrylate (TMPTA), ethylene glycol diacrylate, ethylene glycol dimethacrylate, 1,4-butanediol diacrylate, 1,6-hexanediol diacrylate, and 1,9-nonandiol diacrylate. Examples of the epoxy-based compound may include an epoxy-based compound including a double bond and an epoxy group, and an epoxy-based compound including two or more epoxy groups. Examples of the epoxy-based compound including a double bond and an epoxy group may include glycidyl methacrylate, and 4-hydroxybutyl acrylate glycidyl ether. Examples of the epoxy-based compound including two or more epoxy groups may include 1,6-hexanediol diglycidyl ether, 1,4-butanediol

diglycidyl ether, cyclohexane dimethanol diglycidyl ether, and trimethylol propane polyglycidyl ether. The cross-linking aid may be used in one kind alone, and two kinds or more may be used in combination.

Above all, as the cross-linking aid, usage of triallyl isocyanurate (TAIC) is preferable. Triallyl isocyanurate (TAIC) has preferable solubility to a linear low density polyethylene, and can decrease the crystallinity by cross-linking to maintain the transparency. Further, triallyl isocyanurate (TAIC) can impart flexibility at a low temperature to the protective layer.

In the resin composition to be used for forming the protective layer, the content of the cross-linking aid can be appropriately selected depending on the factors such as the intended cross-linking degree.

The content of the polyolefin-based resin with respect to 100 mass parts of all the resin compositions included in the protective layer is, for example, preferably 90 mass parts or more, and more preferably 95 mass parts or more. Thereby, transparency and flexibility can be improved.

Here, the ratio of each resin composition included in the protective layer can be analyzed from the peak ratio detected from the differential scanning calorimetry (DSC).

(b) Additives

The protective layer may contain additives as required. Examples of the additives may include light stabilizers, ultraviolet absorbers, antioxidants, heat stabilizers, nucleating agents, dispersing agents, leveling agents, plasticizers, anti-foaming agents, flame retardant agents, and fillers.

Examples of the light stabilizers may include a hindered amine-based light stabilizer (HALS). The hindered amine-based light stabilizer can be roughly classified into three types depending on the binding partner of the nitrogen atom in the piperidine skeleton: N-H type (hydrogen binds to nitrogen atom), N-R type (alkyl group (R) binds to nitrogen atom), and N-OR type (alkoxy group (OR) binds to nitrogen atom). Among those, the N-OR type hindered amine-based light stabilizer is preferable. The speed of capturing radicals of the N-OR type is faster than that of the N-H type and the N-R type. Furthermore, the **N**OR type low molecular weight HALS, which migrates to the surface faster than the polymeric HALS, captures radicals for a shorter period of time than the N-H type or N-$CH_3$ type HALS. For this reason, deterioration of the protective layer can be inhibited.

Weathering agents such as the light stabilizers, ultraviolet absorbers and antioxidants may be added to the resin composition as a weather resistant master batch dispersed to a resin. The weather resistant master batch may be appropriately adjusted. Meanwhile, commercial products may be used. The resin used for the weather resistant master batch may be the polyolefin-based resin, and may be other resins.

The content of the additives in the protective layer is, for example, 5 mass% or less.

(2) Properties of protective layer

When the protective layer includes the cross-linked polyolefin-based resin or the non-cross-linked polyolefin-based resin, the cross-linking degree can be shown in gel percentage.

When the protective layer includes the non-cross-linked polyolefin-based resin, the gel percentage of the protective layer is usually 5% or less, and preferably 0%.

Meanwhile, when the protective layer includes the cross-linked polyolefin-based resin, the lower limit value of the gel percentage of the protective layer is, for example, preferably 50% or more, and more preferably 60% or more. The upper limit value of the gel percentage of the protective layer is preferably 90% or less, and more preferably 80% or less. When it does not satisfy the above range, there may be a problem in the heat resistance.

Here, in the present specification, the gel percentage (%) can be measured by the following method. First, 1.0 g of the protective layer is put in a resin mesh, and extracted by xylene at 110°C for 24 hours. Next, the resin mesh itself is taken out and weighed after drying treatment. Next, the mass before and after the extraction is compared to measure the mass% of the remaining insoluble matter. Then, the mass% of the remaining insoluble matter is regarded as the gel percentage.

Note that the gel percentage 0% means that the remaining insoluble matter is substantially 0, which is in a state the cross-linking reaction of the resin composition has not substantially started. In more specific, the gel percentage 0% is the case when the remaining insoluble matter is not present at all, and when the mass% of the remaining insoluble matter measured by a precision balance is less than 0.05 mass%.

Also, components such as pigment component other than the resin component is not included in the remaining insoluble matter. When these foreign substances other than the resin component are found mixed and present in the remaining insoluble matter by the test, the gel percentage of the remaining insoluble matter derived from the resin component that should be obtained excluding these foreign substances can be calculated by measuring the content of these foreign substances in the resin component separately in advance.

(3) Thickness of protective layer

The thickness of the protective layer is not particularly limited, if the protective film satisfying the above described properties can be obtained. The thickness of the protective layer is, for example, preferably 50 μm or more and 700 μm or less, more preferably 80 μm or more and 600 μm or less, and further preferably 100 μm or more and 500 μm or less. When the thickness of the protective layer is the specified value or more, sufficient erosion resistance can be obtained. Also, when the thickness of the protective layer is the specified value or less, the spring constant of the protective film can easily be the specified value or less. As a result, the protective film can be easily elongated, and the close adhesion and following capability to concave and convex and curved surfaces can be improved. Also, when the thickness of the protective layer is the specified value or less, sufficient transparency can be secured.

(4) Method for forming protective layer

The protective layer is obtained by, for example, preparing a resin composition by mixing each of the component, and melting the resin composition to form a sheet thereof. Also, after forming, a cross-linking treatment may be performed.
Examples of the method for mixing each of the component may include a method in which each of the component is permeated to the polyolefin-based resin by dry blend. Also, when the protective layer is obtained by extrusion molding, the cross-linking agent and the cross-linking aid in liquid state may be added to the polyolefin-based resin. Also, the cross-linking aid may be mixed and kneaded in the polyolefin-based resin in advance, and a master batch as the mixture may be used. When the master batch is used, the dispersibility of the cross-linking aid improves.
As a melt molding method, general forming method may be used, and examples thereof may include an injection molding method, an extrusion molding method, a hollow molding method, a compression molding method, and a rotation molding method. The molding temperature may be a temperature exceeding the melting point of the resin composition. Also, the molding temperature may be, depending on the cross-linking aid, a temperature with which cross-linking does not start during forming a film, which is the temperature with which the gel percentage of the resin composition can be maintained 0%. The molding temperature is, for example, 80°C or more and 250°C or less.
As the cross-linking treatment, as described above, examples may include a cross-linking treatment by a cross-linking agent, and a cross-linking treatment by an ionizing radiation.
An easily-adhering treatment may be performed to a surface of the protective layer that is opposite side to the adhesive layer, as required. The close adhesion to the surface layer or the primer layer can be improved. Examples of the easily-adhering treatment may include a corona discharge treatment, a plasma treatment, and an ozone treatment.

3. Adhesive layer

The adhesive layer in the present disclosure is a member for bonding the protective film to a structure.
The adhesive layer is not particularly limited if it can bond the protective film to a structure, and is appropriately selected depending on the factors such as the material of the structure. General adhesive agents can be used for the adhesive layer. Examples thereof may include an ultraviolet curing type adhesive agent, a 2-liquid curing type adhesive agent, and a pressure sensitive adhesive agent. Examples of the pressure sensitive adhesive agent may include an acryl-based pressure sensitive adhesive agent, a urethane-based pressure sensitive adhesive agent, and a silicone-based pressure sensitive adhesive agent. Among them, the acryl-based pressure sensitive adhesive agent is preferable. The acryl-based pressure sensitive adhesive agent has excellent transparency, weather resistance, and heat resistance.
The thickness of the adhesive layer is not particularly limited if the protective film and the structure can be adhered, and is appropriately selected depending on the applications. The thickness of the adhesive layer is, for example, 25 μm or more and 120 μm or less, may be 25 μm or more and 90 μm or less, and may be 30 μm or more and 80 μm or less.

4. Surface layer

The protective film in the present disclosure preferably includes, as shown in FIG. 2 for example, surface layer 3 including a cured product of an electron beam curable resin composition on a surface of the protective layer 1 that is opposite side to the adhesive layer 2. When the protective film includes the surface layer, durability can be further improved.

(1) Material of surface layer

(a) Electron beam curable resin

The electron beam curable resin composition includes at least an electron beam curable resin. The electron

beam curable resin can be appropriately selected from a polymerizable monomer, polymerizable oligomer, and a polymerizable prepolymer, and used.

The polymerizable monomer is, for example, preferably a (meth)acrylate-based monomer including a radical polymerizable unsaturated group in a molecule, and above all, more preferably multifunctional (meth)acrylate. Note that (meth)acrylate refers to acrylate or methacrylate. The multifunctional (meth)acrylate may be a (meth)acrylate including two or more ethylene unsaturated bonds in a molecule, and not particularly limited. Specific examples thereof may include ethylene glycol di(meth)acrylate, propylene glycol di(meth)acrylate, 1,4-butane diol di(meth)acrylate, 1,6-hexane diol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, allylated cyclohexyl di(meth)acrylate, isocyanurate di(meth) acrylate, trimethylol propane tri(meth)acrylate, ethylene oxide-moified trimethylol propane tri(meth)acrylate, dipentaerythritol tri(meth)acrylate, propionic acid-modified dipentaerythritol tri(meth)acrylate, pentaerythritol tri(meth)acrylate, propylene oxide-modified trimethylol propane tri(meth)acrylate, tris(acryloxyethyl)isocyanurate, propionic acid-modified dipentaerythritol penta(meth)acrylate, dipentaerythritol hexa(meth)acrylate, ethylene oxide-modified dipentaerythritol hexa(meth)acrylate, and caprolactone-modified dipentaerythritol hexa (meth) acrylate. These multifunctional (meth) acrylate may be used in one kind alone, and two kinds or more thereof may be used in combination.

Also, together with the multifunctional (meth)acrylate, for the purposes such as to decrease the viscosity, a monofunctional (meth)acrylate may be appropriately used to the extent that does not impair the object of the present invention. Examples of the monofunctional (meth)acrylate may include methyl(meth)acrylate, ethyl(meth)acrylate, propyl(meth)acrylate, butyl(meth)acrylate, pentyl(meth)acrylate, hexyl(meth)acrylate, cyclohexyl(meth)acrylate, 2-ethylhexyl(meth)acrylate, lauryl(meth)acrylate, stearyl(meth)acrylate, and isobornyl(meth)acrylate. These monofunctional (meth)acrylate may be used in one kind alone, and two kinds or more thereof may be used in combination.

Examples of the polymerizable oligomer may include an oligomer including a radical polymerizable unsaturated group in a molecule. Specific examples thereof may include an epoxy(meth)acrylate-based, a urethane(meth)acrylate-based, a polyester(meth)acrylate-based, and a polyether(meth)acrylate-based. Here, the epoxy(meth)acrylate-based oligomer is obtained by, for example, an esterification of the oxirane ring of a comparatively low molecular weight bisphenol type epoxy resin or novolac type epoxy resin by making (meth)acrylic acid to react with. Also, this epoxy(meth)acrylate-based oligomer may be partially modified with dibasic acid type carboxylic acid anhydride, and the carboxyl-modified epoxy (meth) acrylate oligomer may be used. The urethane(meth)acrylate-based oligomer is obtained by, for example, an esterification of polyurethane oligomer obtained by a reaction of polyether polyol or polyester polyol with polyisocyanate, by (meth)acrylic acid. The polyester(meth)acrylate-based oligomer is obtained by, for example, an esterification of a hydroxyl group of polyester oligomer having a hydroxyl group in both ends obtained by condensation of a polyfunctional carboxylic acid and a polyfunctional alcohol, by (meth)acrylic acid. Alternatively, the polyester(meth)acrylate-based oligomer is obtained by, for example, an esterification of a hydroxyl group in the end of an oligomer obtained by adding alkylene oxide to a polyfunctional carboxylic acid, by (meth)acrylic acid. The polyether(meth)acrylate-based oligomer is obtained by an esterification of a hydroxyl group of polyether polyol by (meth)acrylic acid.

Further, examples of the polymerizable oligomer may include highly hydrophobic polybutadiene (meth)acrylate-based oligomer including a (meth)acrylate group in a side chain of a polybutadiene oligomer, a silicone (meth)acrylate-based oligomer including a polysiloxiane bond in a main chain, an aminoplast resin (meth)acrylate-based oligomer in which an aminoplast resin including a lot of reactive groups in a small molecule is modified, and an oligomer including a cation polymerizable functional group in a molecule. Examples of the oligomer including the cation polymerizable functional group in a molecule may include a novolac type epoxy resin, a bisphenol-type epoxy resin, an aliphatic vinyl ether, and an aromatic vinyl ether.

(b) Ultraviolet absorber

The surface layer may include an ultraviolet absorber. As described later, when a primer layer is not disposed between the protective layer and the surface layer, the surface layer preferably includes the ultraviolet absorber. Meanwhile, when a primer layer is disposed between the protective layer and the surface layer, it is preferable that at least one layer of the surface layer and the primer layer includes the ultraviolet absorber.

The ultraviolet absorber may be any of inorganic ultraviolet absorbers and organic ultraviolet absorbers.

As the inorganic ultraviolet absorber, for example, titanium oxide, cerium oxide, zinc oxide having an average particle size of about 5 nm or more and 120 nm or less are preferable.

Examples of the organic ultraviolet absorber may include a benzotriazole-based ultraviolet absorber, a triazine-based ultraviolet absorber, a benzophenone-based ultraviolet absorber, a salicylate-based ultraviolet absorber, and an acrylonitrile-based ultraviolet absorber. Examples of the benzotriazole-based ultraviolet absorber may include 2-(2-hydroxy-5-methylphenyl)benzotriazole, 2-(2-hydroxy-3,5-di-tert-amilphenyl)benzotriazole, and 3-[3-(benzotriazole-2-il)-5-tert-butyl-4-hydroxyphenyl]propionic acid ester of polyethylene glycol. Examples of the triazine-based ultraviolet

absorber may include 2-(4,6-diphenyl-1,3,5-triazine-2-il)-5-[(hexyl)oxy]phenol, 1,3,5-triazine-2,4,6(1H,3H,5H)-trione, and 1,3-5-tri[[3,5-bis-(1,1-dimethylethyl)-4-hydroxyphenyl]methyl].

Among those, the triazine-based ultraviolet absorber is preferable. The triazine-based ultraviolet absorber has high ultraviolet absorbing ability, and it is not easily deteriorated with respect to a high energy such as an ultraviolet ray.

In particular, the triazine-based ultraviolet absorber is preferably a hydroxyphenyl triazine compound represented by the following general formula (I).

[Chemical formula 1]

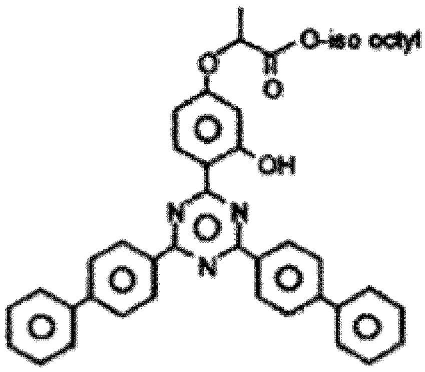

(I)

The lower limit value of the content of the ultraviolet absorber in the electron beam curable resin composition is, for example, to 100 mass parts of the electron beam curable resin, preferably 0.01 mass parts or more. The upper limit value of the content of the ultraviolet absorber in the electron beam curable resin composition is, for example, to 100 mass parts of the electron beam curable resin, preferably 20 mass parts or less, and more preferably 15 mass parts or less. If the content of the ultraviolet absorber is too little, there is a possibility that sufficient weather resistance may not be exhibited. Meanwhile, if the content of the ultraviolet absorber is too much, there is a possibility that the ultraviolet absorber may bleed. Also, if the content of the ultraviolet absorber is too much, there is a possibility that the curing of the electron beam curable resin may be inhibited.

(c) Other additives

The surface layer may include additives other than the ultraviolet absorber as required.

A light stabilizer may be used together with the ultraviolet absorber in order to impart the weather resistance to the protective layer. Examples of the light stabilizer may include a hindered amine-based light stabilizer. Specific examples may include 2-(3,5-di-tert-butyl-4-hydroxybenzile)-2-n'-butylmalonic acid bis(1,2,2,6,6-pentamethyl-4-piperidyl), bis(1,2,2,6,6-pentamethyl-4-piperidyl)sebacate, and tetrakis(2,2,6,6-tetramethyl-4-piperidyl)-1,2,3,4-butanetetracarboxylate.

Also, it is preferable that the surface layer contains burned kaolin particles. When the surface layer contains the burned kaolin particles, marring resistance of the protective film improves. Here, marring means that small scratches are generated when the surface of the protective film is rubbed. Also, superior in marring resistance means that the scratches are not easily generated.

Examples of other additives may include an abrasion resistance improving agent, a polymerization inhibitor, a cross-linking agent, an infrared ray absorber, an antistatic agent, an adhesiveness improving agent, a leveling agent, a thixotropy imparting agent, a coupling agent, a plasticizer, an anti-foaming agent, a filler, a solvent, and a coloring agent.

The abrasion resistance improving agent may be, for example, an inorganic substance and may be an organic substance. Examples of the inorganic substance may include spherical particles such as α-alumina, silica, kaolinite, iron oxide, diamond, and silicon carbide. The particle shape is not particularly limited, and examples thereof may include sphere, ellipsoid, polyhedron, and scale-shape. Among those, the spherical shape is preferable. Examples of the organic substance may include resin beads such as a cross-linked acryl resin and a polycarbonate resin. The particle size of the spherical particles and the resin beads is usually about 30% or more and 200% or less of the thickness of the surface layer. Above all, the spherical α-alumina is preferable. The hardness of the spherical α-alumina is high, and the effect thereof for improving the abrasion resistance is large. Also, the spherical particles may be comparatively easily obtained.

Examples of the polymerization inhibitor may include hydroquinone, p-benzoquinone, hydroquinone monomethyl ether, pyrogallol, and t-butyl catechol. Examples of the cross-linking agent may include a polyisocyanate compound, an epoxy compound, a metal chelate compound, an aziridine compound, and oxazoline compound. Examples of the filler may include barium sulfate, talc, clay, calcium carbonate, and aluminum hydroxide. Examples of the coloring agent may include Quinacridone red, iso-indolinone yellow, phthalocyanine blue, phthalocyanine green, and pigments with titanium oxide and carbon black. Examples of the infrared ray absorber may include a diol-based metal complex, a phthalocyanine-based compound, and a diimmonium compound.

(2) Thickness of surface layer

The lower limit value of the thickness of the surface layer is, for example, 1 μm or more, and may be 2 μm or more. The upper limit value of the thickness of the surface layer is, for example, 20 μm or less. If the thickness of the surface layer is too thin, there is a possibility that the desired effect cannot be obtained. Meanwhile, if the thickness of the surface layer is too thick, there is a possibility that the spring constant of the protective film may be too large.

(3) Method for forming surface layer

Examples of the method for forming the surface layer may include a method in which an electron beam curable resin composition is applied on the protective layer, and cured by irradiating an electron beam.

As the application method, general methods may be applied, and examples thereof may include gravure coating, bar coating, roll coating, reverse roll coating, and comma coating. Among those, gravure coating is preferable.

On the occasion of irradiating an electron beam, the acceleration voltage is appropriately selected depending on the electron beam curable resin to be used, and the thickness of the electron beam curable resin composition to be applied. The acceleration voltage is usually 70 kV or more and 300 kV or less. It should be noted that, in irradiation of the electron beam, the higher the acceleration voltage, the more the permeability increases. For this reason, it is preferable to set the acceleration voltage so as to substantially equalize the permeation thickness of the electron beam and the thickness of the surface layer. The excess irradiation of the electron beam to the protective layer can be inhibited.

Also, the exposure dose is preferably the amount with which the cross-linking density of the surface layer is saturated. The lower limit value of the exposure dose is usually 5 kGy or more and preferably 10 kGy or more. The upper limit value of the exposure dose is usually 300 kGy or less, and preferably 50 kGy or less.

Also, the electron beam source is not particularly limited, and various electron beam accelerator such as Cockcroft-Walton type, Van de Graaff type, resonance transformer type, insulating core transformer type, linear type, dynamitron type, and high frequency type can be used.

5. Primer layer

The protective film in the present disclosure may include a primer layer between the protective layer and the surface layer. The close adhesion of the protective layer and the surface layer can be improved.

The material of the primer layer is not particularly limited if the material can improve the close adhesion of the protective layer and the surface layer. Above all, from the point of close adhesion, a urethane resin is preferable. As the urethane resin, for example, a 2-liquid curing type urethane resin can be used. In the 2-liquid curing type urethane resin, as a polyol component, an acryl-urethane block copolymer is preferably used. Also, in the 2-liquid curing type urethane resin, from the point of light resistant close adhesion, as an isocyanate component, aliphatic isocyanate or alicyclic isocyanate is preferably used.

Also, in the acryl-urethane block copolymer, from the point of light resistant close adhesion, also as an isocyanate component in the urethane portion, aliphatic isocyanate or alicyclic isocyanate is preferably used. Also, alicyclic isocyanate and aliphatic isocyanate may be used in combination.

As the alicyclic isocyanate, for example, IPDI (isophorone diisocyanate), and hydrogen added MDI (hydrogen added diphenyl methane diisocyanate) can be used. Also, as the aliphatic isocyanate, for example, 1,6-hexamethylene diisocyanate, and 2,2,4-trimethyl hexamethylene diisocyanate can be used.

The above described acryl-urethane block copolymer refers to a copolymer including both blocks of an acryl polymer portion and a urethane polymer portion. By including the acryl polymer potion, when an acrylate-based electron beam curable resin is used in the surface layer, the close adhesion of the surface layer and the primer layer improves. Also, by including the urethane polymer portion, the close adhesion of the surface layer and the primer layer improves. In particular, the close adhesion of the protective layer using the urethane acrylate-based electron beam curable resin, and the primer layer improves.

The acryl-urethane block copolymer is, for example, preferably a copolymer configured by (a) an acryl polymer component containing a hydroxyl group including an acryl-based monomer in the main chain, and including a hydroxyl group in the end or side chain, (b) a polyester-based urethane polymer component or a polyether-based urethane polymer

component, and (c) diisocyanate, which is obtained by producing a prepolymer by bringing these 3 components into reaction, and bringing this prepolymer into reaction with a chain extender such as diamine to extend the chain.

The (b) polyester-based urethane polymer component, and polyether-based urethane polymer component may be respectively used alone, or may be used in combination. Also, as the polyester-based urethane polymer component, polymers obtained by (1) adding a diamine compound to a polyester polyol component to convert a part of the urethane skeleton to urea, (2) introducing a phenyl group to a polyester polyol component, and (3) adding a diamine compound to a polyester polyol component of which alcohol component is polycarbonate-based to convert a part of the urethane skeleton to urea, can be used. In the acryl-urethane block copolymer, the ratio of the acryl polymer component and the urethane polymer component may be appropriately adjusted, but in the point of obtaining good close adhesion, it is preferably 40/60 to 60/40 in a mass ratio.

Also, as the urethane polymer component, a thermoplastic urethane resin can be used. The thermoplastic urethane resin is representatively a resin obtained by bringing diisocyanate, a polymer polyol, and low molecular multifunctional active hydrogen compound such as low molecular diol if necessary, into reaction. Note that polymer in the polymer polyol is an antonym of the low molecular multifunctional active hydrogen compound, and includes a molecular weight of less than 10,000.

Examples of the diisocyanate used in the thermoplastic urethane resin may include aromatic diisocyanate, aliphatic diisocyanate, and alicyclic diisocyanate. Examples of the aromatic diisocyanate may include 4,4'-diphenyl methane diisocyanate (MDI), 2,4-tolylene diisocyanate, 1,5-naphthalene diisocyanate, n-isocyanate phenyl sulfonyl isocyanate, and m- or p-isocyanate phenyl sulfonyl isocyanate. Examples of the aliphatic isocyanate may include 1,6-hexamethylene diisocyanate. Examples of the alicyclic diisocyanate may include isophorone diisocyanate (IPDI), hydrogenated xylene diisocyanate, and hydrogenated diphenyl methane diisocyanate. Multimers or adducts of these diisocyanate may be used. Also, these diisocyanate may be used in one kind alone, and two kinds or more may be mixed and used.

Examples of the polymer polyol used in the thermoplastic urethane resin may include polyester polyol and polyether polyol. These may be used in one kind alone, and two kinds or more may be mixed and used. Among them, from the point of weather resistant close adhesion, polyester polyol is preferable.

Examples of polyester polyol may include a condensed polyester diol obtained by bringing low molecular diol and dicarboxylic acid into reaction, polylactone diol obtained by a ring-opening polymerization of lactone, and polycarbonate diol. Examples of dicarboxylic acid may include aliphatic dicarboxylic acids, and aromatic dicarboxylic acids. Examples of the aliphatic dicarboxylic acids may include succinic acid, adipic acid, sebacic acid, glutaric acid, azelaic acid, maleic acid, and fumaric acid. Examples of the aromatic dicarboxylic acids may include terephthalic acid, and isophthalic acid. Dicarboxylic acid may be used in one kind alone, and two kinds or more may be mixed and used. Also, examples of the lactone may include ε-caprolactone.

Specific examples of polyester polyol may include polyethylene adipate, polybutylene adipate, polyhexamethylene adipate, polyneopentyl adipate, polyethylene butylene adipate, polybutylene hexabutylene adipate, polydiethylene adipate, poly(polytetramethyleneether)adipate, polyethylene azete, polyethylene sebacate, polybutylene azete, polybutylene sebacate, and polyhexamethylene carbonate diol. These may be used in one kind alone and two kinds or more may be mixed and used.

Examples of the low molecule diol used in the thermoplastic urethane resin may include ethylene glycol, diethylene glycol, propylene glycol, dipropylene glycol, 1,3-butane diol, 1,4-butane diol, neopentyl glycol, and 1,6-hexane diol. Examples may also include low molecule diols including a cyclic group such as bis(hydroxymethyl)cyclohexene, m- or p-xylene glycol, bis(hydroxymethyl)benzene, 1,4-bis(2-hydroxyethoxy)benzene, and 4,4-bis(2-hydroxyethoxy)-diphenyl propane (ethylene oxide adduct of bisphenol A). These may be used in one kind alone, and two kinds or more may be mixed and used.

The thickness of the primer layer varies depending on the applications, but for example, it is 1 μm or more and 10 μm or less.

Examples of the method for forming the primer layer may include a method in which a resin composition for primer layer is applied on the protective layer. As the application method, general methods may be applied, and examples thereof may include a roll coating method.

6. Other configurations

The protective film in the present disclosure may include other configurations depending on applications.

The protective film in the present disclosure may include a separator on a surface of the adhesive layer that is opposite side to the protective layer.

7. Applications

The protective film in the present disclosure is, for example, used by adhering to a surface of a structure. Also, the surface of the structure to which the protective film is adhered may be a flat surface, and may be a curved surface. The structure will be described later.

B. Structure

The structure in the present disclosure includes the above described protective film.

The structure is preferably a structure set up outdoor or a structure used outdoor. Examples of the structure set up outdoor may include a windmill of a wind energy conversion system, a lightning rod, an antenna, a radome, and a piping. Examples of the piping may include a duct, a gas pipe, a water pipe, and an electric line pipe. Also, examples of the structure used outdoor may include a cabinet or a part of a moving body. Examples of the moving body may include an automobile, a railway vehicle, an aircraft, and a bicycle. Examples of the automobile may include a car, a truck, and a bus. Examples of the railway vehicle may include a train, a bullet train, and a locomotive. Examples of the aircraft may include an airplane, a helicopter, and a drone.

Above all, the structure is preferably a windmill of a wind energy conversion system. The windmill is, for example, configured by a blade, a nacelle, a hub, and a tower. In particular, the protective film is preferably adhered to a surface of the blade of the windmill.

The blade of the windmill of the wind energy conversion system is exposed to the strict environment as described above. In addition, the blade rotates at high speed, and thus possibilities of damage, deformation, surface contamination, and surface peeling increase. These defects lead to a decrease in power generation efficiency. In the worst case, it may result in the blade breaking or falling off. For this reason, the protective film is preferably disposed on the surface of the blade of the windmill of the wind energy conversion system.

Also, when the protective film is disposed on the surface of the moving body, the protective film can be used as, for example, a wrapping film.

The protective film may be disposed on a part of the surface of the structure, and may be disposed on the entire surface of the structure.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

The present disclosure will be hereinafter explained in further details with reference to Examples and Comparative Examples.

[Example 1]

(1) Method for forming protective layer

A resin composition was prepared by mixing the below weathering agent master batch in the ratio of 5 mass parts with respect to 95 mass parts of the below base resin.

- Base resin: metallocene-based linear low density polyethylene-based resin (M-LLDPE) having density of 0.901 $g/cm^3$, melting point of 93°C, and MFR at 190°C of 2.0 g/10 min.
- Weathering agent master batch: 0.6 mass parts of HALS ("KEMISTAB62" from CHEMIPRO KASEI), 3.5 mass parts of ultraviolet absorber 1 ("KEMISORB12" from CHEMIPRO KASEI), and 0.6 mass parts of ultraviolet absorber 2 ("KEMISORB79" from CHEMIPRO KASEI) were mixed with respect to 100 mass parts of low density polyethylene-based resin having density of 0.880 $g/cm^3$, and MFR at 190°C of 3.5 g/10 min.

The MFR is the value measured by the method described in the section "2. Protective layer (1) Material of protective layer (a) Polyolefin-based resin".

The resin composition was made into a sheet using a film forming machine having an extruding machine of φ30 mm and a T-die of 200 mm width, at an extruding temperature of 210°C, and thereby a protective layer of 300 μm thick was formed. Note that the taking-up speed was adjusted so as to obtain the specified thickness. Also, regarding a cooling roll and a rubber roll directly under the T die, a cooling roll with the surface roughness of Rz 1.5 μm and chrome-plated finish

was used as the cooling roll, and a silicone rubber roll with hardness of 70 degrees was used as the rubber roll.

(2) Formation of adhesive layer

A pressure sensitive adhesive agent composition was prepared by blending the below components.

- Pressure sensitive adhesive agent: (meth)acrylic acid alkyl ester-based copolymer ("Nissetsu KP-2680" from NIPPON CARBIDE INDUSTRIES CO., INC., solid content concentration: 40 mass%, solvent: methyl ethyl ketone) 100 mass parts
- Cross-linking agent: isocyanate-terminated urethane resin ("Nissetsu CK-121" from NIPPON CARBIDE INDUSTRIES CO., INC., solid content concentration: 10 mass%, solvent: methyl ethyl ketone) 0.2 mass parts
- Silane coupling agent ("KBM-403" from Shin-Etsu Chemical Co., Ltd., solid content concentration: 100 mass%) 0.23 mass parts
- Phenol-based antioxidant ("ADK STAB AO-60G" from ADEKA CORPORATION, solid content concentration: 100 mass%) 0.57 mass parts
- Ultraviolet absorber ("ADK STAB LA-24" from ADEKA CORPORATION, solid content concentration: 100 mass%) 0.57 mass parts

Next, the pressure sensitive adhesive agent composition was applied on a release-treated surface of a PET separator ("PET50x1-J2" from NIPPA CORPORATION) having a thickness of 50 μm so as to obtain the thickness after drying of 60 μm, and dried to form an adhesive layer. After that, a stacked body of the separator and the adhesive layer was laminated on one surface of the protective layer, and kept for 3 days at 50°C. Thereby, a protective film was obtained.

[Example 2]

A protective film was produced in the same manner as in Example 1 except that the thickness of the protective layer was changed to 150 μm.

[Example 3]

A protective film was produced in the same manner as in Example 1 except that the weathering agent master batch used in Example 1 was mixed in the ratio of 5 mass parts with respect to 95 mass parts of the below base resin to prepare the resin composition.

- Base resin: metallocene-based linear low density polyethylene-based resin (M-LLDPE) having density of 0.887 g/cm$^3$, melting point of 119°C, and MFR at 190°C of 5.0 g/10 min

[Example 4]

A protective film was produced in the same manner as in Example 3 except that the thickness of the protective layer was changed to 150 μm.

[Example 5]

A protective layer was formed in the same manner as in Example 1. Next, 5 g/m$^2$ of the below electron beam curable resin composition was applied on one surface of the protective layer, an electron beam at an acceleration voltage of 125 kV and exposure dose of 50 kGy (5 Mrad) was irradiated to cure the electron beam curable resin composition, and thereby a surface layer was formed.

- Electron beam curable resin composition: the electron beam curable resin composition was prepared by adding 20 mass parts of silica particles having an average particle size of 5 μm, and 3 mass parts of an ultraviolet absorber (compound represented by the general formula (I), "Tinuvin479" from BASF Japan Ltd.), to 100 mass parts of urethane acrylate.

Next, in the same manner as in Example 1, an adhesive layer was formed on a separator, and a stacked body of the separator and the adhesive layer was laminated on the other surface of the protective layer, and kept for 3 days at 50°C. Thereby, a protective film was obtained.

[Example 6]

A protective film was produced in the same manner as in Example 5 except that the thickness of the protective layer was changed to 150 μm.

[Example 7]

A protective layer was formed in the same manner as in Example 1. Next, 1.5 g/$m^2$ of the below primer composition was applied on one surface of the protective layer to form a primer layer.

- Primer composition: the primer composition was prepared by adding 16 mass parts of an ultraviolet absorber (compound represented by the general formula (I), "Tinuvin479" from BASF Japan Ltd.) with respect to 100 mass parts of 2-liquid curing type acryl-urethane resin.

Next, in the same manner as in Example 5, a surface layer was formed on the primer layer. Next, in the same manner as in Example 1, an adhesive layer was formed on the separator, and a stacked body of the separator and the adhesive layer was laminated on the other surface of the protective layer, and kept for 3 days at 50°C. Thereby, a protective film was obtained.

[Example 8]

A protective film was produced in the same manner as in Example 7 except that the thickness of the protective layer was changed to 150 μm.

[Comparative Example 1]

A pre-solution was prepared by mixing and agitating 70 g of water dispersible polycarbonate-based polyurethane A (cyclohexane skeleton content: about 36 mass%), 0.85 g of Tinuvin1130 (ultraviolet absorber from BASF Japan Ltd.), 0.5 g of Tinuvin292 (light stabilizer from BASF Japan Ltd.), 0.2 g of TritonGR-7M (surfactant from Dow Chemical Company), 0.1 g of AMP95 (neutralizer from ANGUS Chemical Company), and 3 g of deionized water. The pre-solution was bar-coated on the PET film, dried in a hot air oven at 90°C for 3 minutes, and then further dried at 160°C for 3 minutes to cure. Thereby, a protective layer having a thickness of 300 μm was formed.

Next, in the same manner as in Example 1, an adhesive layer was formed on a separator, and a stacked body of the separator and the adhesive layer was laminated on a surface of the protective layer that is opposite to the PET film, and kept for 3 days at 50°C. Thereby, a protective film was obtained.

[Comparative Example 2]

A protective film was produced in the same manner as in Example 1 except that the weathering agent master batch used in Example 1 was mixed in the ratio of 5 mass parts with respect to 95 mass parts of the below base resin to prepare the resin composition.

- Base resin: urethane resin having density of 1.15 g/$cm^3$ and glass transition point of -25°C.

[Comparative Example 3]

A protective layer was formed in the same manner as in Comparative Example 2 except that the thickness of the protective layer was changed to 150 μm. Next, in the same manner as in Example 5, a surface layer was formed on one surface of the protective layer. Next, in the same manner as in Example 1, an adhesive layer was formed on the separator, and a stacked body of the separator and the adhesive layer was laminated on the other surface of the protective layer, and kept for 3 days at 50°C. Thereby, a protective film was obtained.

[Evaluation]

(1) Spring constant at 10% elongation

A tensile test was performed to the protective film using "TensilonRTF1150" from A & D Company, Ltd. as a tensile test machine in accordance with ISO 527-3:2018, in the below conditions. The tensile load and the elongation at 10%

elongation were measured, and the spring constant at 10% elongation was obtained. It should be noted that the tensile test was performed after peeling off the separator from the protective film.

<Measurement conditions for tensile test>

- Test piece: Rectangular shape
- Test piece size: 10 mm width, 120 mm length
- Distance between chucks: 100 mm
- Tensile speed: 50 mm/min

[Table 1]

| | Comp. Ex. 1 | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Thickness of protective layer (μm) | 300 | 300 | 150 | 300 | 150 | 300 | 150 | 300 | 150 | 300 | 150 |
| Spring constant at 10% elongation (N/mm) | 0.42 | 0.65 | 1.02 | 1.21 | 0.59 | 0.65 | 0.33 | 1.25 | 0.62 | 1.30 | 0.65 |

(2) Liquid resistance test

An ultraviolet ray having a wavelength of 300 nm or more and 400 nm or less at an irradiance of 1000 $W/m^2$ and a black panel temperature of 63°C was irradiated from the protective layer side surface of the protective film using "I Super UV Tester SUV-W151" from IWASAKI ELECTRIC CO., LTD. as a weather resistance test machine. The black panel temperature was 63 ± 5°C. The irradiating time was 120 hours and 240 hours. As described above, the weather resistance test was performed after peeling off the separator from the protective film, and bonding the ETFE film.

(2-1) Maintenance factor of tensile breaking stress

The tensile breaking stress before and after the light resistance test was respectively measured using "Tensilon RTF1150" from A & D Company, Ltd. as a tensile test machine, in accordance with ISO 527-3: 2018, in the below conditions. Then, the maintenance factor of the tensile breaking stress after the light resistance test was obtained. Before the light resistance test, the tensile test was performed after peeling off the separator from the protective film. Also, after the light resistance test, the tensile test was performed after peeling off the ETFE film.

<Measurement conditions>

- Test piece: Rectangular shape
- Test piece size: 10 mm width, 50 mm length
- Distance between chucks: 30 mm
- Tensile speed: 50 nm/min

[Table 2]

| | | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| | | Maintentance factor of tensile breaking stress after light resistance test (%) | | | | | | | | | |
| Irradiation time (h) | Initial | 100 | 100 | 100 | 100 | 100 | 100 | 100 | 100 | 100 | 100 |
| | 120 | 43 | 43 | 50 | 35 | 66 | 33 | 97 | 100 | 95 | 95 |
| | 240 | 13 | 13 | 26 | 31 | 47 | 23 | 96 | 94 | 100 | 95 |

(2-2) Yellowing degree (ΔYI)

As a colorimeter, "CC-i" from Suga Test Instruments Co., Ltd. was used, the yellow degree (YI) before and after the light resistance test was respectively obtained by a stimulus value direct reading method in accordance with ISO 17223:2014, in the below conditions. Then, the yellowing degree (ΔYI) was obtained. Before the light resistance test, the yellow degree was measured after peeling off the separator from the protective film. Also, after the light resistance test, the yellow degree was measured after peeling off the ETFE film.

<Measurement conditions>

- Light source: C light source
- Visual field: 2°

[Table 3]

| | | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| | | Yellowing degree (ΔYI) after light resistance test | | | | | | | | | |
| Irradiation time (h) | Initial | 0 | 0 | 0 | 0 | 0 | 0 | 0 | 0 | 0 | 0 |
| | 120 | 3 | 20 | 0 | 0 | 2 | 6 | 1 | 0 | 0 | 0 |
| | 240 | 20 | 25 | 1 | 1 | Not measured | 7 | 1 | 1 | 0 | 1 |

(2-3) Maintenance factor of elongation at break

As a tensile test machine, "Tensilon RTF1150" from A & D Company, Ltd. was used, and the elogation at break before and after the light resistance test was respectively obtained in accordance with ISO 527-3:2018, in the below conditions. Then, the maintenance factor of the elongation at break after the light resistance test was obtained. Before the light resistance test, the tensile test was performed after peeling off the separator from the protective film. Also, after the light resistance test, the tensile test was performed after peeling off the ETFE film.

<Measurement conditions>

- Test piece: Rectangular shape
- Test piece size: 10 mm width, 50 mm length
- Distance between chucks: 30 mm
- Tensile speed: 50 mm/min

[Table 4]

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| | | Maintenance factor of elongation at break after light resistance test (%) | | | | | | | |
| Irradiation time (h) | Initial | 100 | 100 | 100 | 100 | 100 | 100 | 100 | 100 |
| | 120 | 64 | 58 | 115 | 85 | 99 | 103 | 94 | 99 |
| | 240 | 32 | 27 | 96 | 62 | 98 | 103 | 96 | 98 |

(3) High temperature high humidity test

The protective film was kept at a temperature of 85°C and a humidity of 85%RH for 500 hours, 1000 hours, 1500 hours, or 2000 hours using "high temperature high humidity bath FX424C" from Kusumoto Chemicals, Ltd.

(3-1) Maintenance factor of tensile breaking stress

The maintenance factor of the tensile breaking stress after the high temperature high humidity test was obtained in the same manner as in (2-1) above.

[Table 5]

| | | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| | | Maintenance factor of tensile breaking stress after high temperature high humidity test (%) | | | | | | | | | |
| Kept time (h) | Initial | 100 | 100 | 100 | 100 | 100 | 100 | 100 | 100 | 100 | 100 |
| | 2000 | 43 | 39 | 44 | 62 | 72 | 90 | Not measured | 95 | 95 | 90 |

(3-2) Yellowing degree (ΔYI)

The yellowing degree (ΔYI) after the high temperature high humidity test was abtained in the same manner as in (2-2) above.

[Table 6]

| | | Comp. Ex. 2 | Comp. Ex. 3 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| | | Yellowing degree (ΔYI) after high temperature high humidity test | | | | | | | | | |
| Elapsed time (h) | Initial | 0 | 0 | 0 | 0 | 0 | 0 | 0 | 0 | 0 | 0 |
| | 500 | 1 | 21 | 0 | 0 | 0 | 0 | 0 | 1 | 0 | 1 |
| | 1000 | 3 | 27 | 1 | 1 | 1 | 1 | 1 | 1 | 1 | 0 |
| | 1500 | 5 | 35 | 1 | 2 | 2 | 2 | 1 | 1 | 1 | 1 |
| | 2000 | 4 | 40 | 2 | 2 | 2 | 2 | 2 | 2 | 2 | 2 |

(3-3) Maintenance factor of elongation at break

The maintenance factor of elongation at break after the high temperature high humidity test was obtained in the same manner as in (2-3) above.

[Table 7]

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| | | Maintenance factor of elongation at break after high temperature high humidity test (%) | | | | | | | |
| Elapsed time (h) | Initial | 100 | 100 | 100 | 100 | 100 | 100 | 100 | 100 |
| | 500 | 97 | 82 | 114 | 132 | 98 | 98 | 97 | 98 |
| | 1000 | 98 | 40 | 133 | 143 | 96 | 99 | 99 | 99 |
| | 1500 | 95 | 39 | 131 | 152 | 98 | 100 | 99 | 99 |
| | 2000 | 93 | 27 | 133 | 149 | 95 | 98 | 95 | 98 |

In Examples 1 to 8, since the olefin-based resin is used in the protective layer, the maintenance factor of the tensile breaking stress after the specified light resistance test was respectively higher compared to Comparative Examples 1 to 3 using the polyurethane-based resin in the protective layer. Also, in Examples 1 to 8, compared to Comparative Examples 2 to 3, the ΔYI after the specified light resistance test was smaller, and compared to Comparative Examples 1 to 3, the ΔYI after the specified high temperature high humidity test was smaller.

Also, when Examples 1 to 4 are compared to Examples 5 to 8, when the protective film further includes the surface layer, the maintenance factor of the tensile breaking stress after the specified light resistance test, the maintenance factor of the elongation at break after the specified light resistance test, the maintenance factor of the tensile breaking stress after the specified high temperature high humidity test, and the maintenance factor of the elongation at break after the specified high temperature high humidity test were higher. As a result, it was confirmed that the durability further improves when the protective film further includes the surface layer.

The present disclosure provides the following [1] to [7].

[1] A protective film comprising a protective layer including a polyolefin-based resin, and an adhesive layer disposed on one surface of the protective layer, wherein a value resulting from dividing a tensile load obtained when the film is elongated by 10% by an elongation obtained when the film is elongated by 10% is 3.0 N/mm or less.
[2] The protective film according to [1], wherein, when a light resistance test of irradiating an ultraviolet ray with a wavelength of 300 nm or more and 400 nm or less at an irradiance of 1000 W/$m^2$ and a black panel temperature of 63°C for 240 hours is performed, a maintenance factor of a tensile breaking stress after the light resistance test is 18% or more.
[3] The protective film according to [1] or [2], wherein a yellowing degree (ΔYI) after the light resistance test is 10 or less.
[4] The protective film according to any one of [1] to [3], wherein, when a high temperature high humidity test of keeping a temperature of 85°C and a humidity of 85%RH for 2000 hours is performed, a yellowing degree (ΔYI) after the high temperature high humidity test is 10 or less.
[5] The protective film according to any one of [1] to [4], wherein the protective film includes a surface layer including a cured product of an electron beam curable resin composition on a surface of the protective layer that is opposite side to the adhesive layer.
[6] The protective film according to [5], wherein the protective film includes a primer layer between the protective layer and the surface layer.
[7] A structure comprising the protective film according to any one of [1] to [6].

Reference Signs List

1 protective layer
2 adhesive layer
3 surface layer
10 protective film

**Claims**

**1.** A protective film comprising a protective layer including a polyolefin-based resin, and an adhesive layer disposed on one surface of the protective layer, wherein
a value resulting from dividing a tensile load obtained when the film is elongated by 10% by an elongation obtained

when the film is elongated by 10% is 3.0 N/mm or less.

**2.** The protective film according to claim 1, wherein, when a light resistance test of irradiating an ultraviolet ray with a wavelength of 300 nm or more and 400 nm or less at an irradiance of 1000 $W/m^2$ and a black panel temperature of 63°C for 240 hours is performed, a maintenance factor of a tensile breaking stress after the light resistance test is 18% or more.

**3.** The protective film according to claim 1 or claim 2, wherein a yellowing degree (ΔYI) after the light resistance test is 10 or less.

**4.** The protective film according to claim 1 or claim 2, wherein, when a high temperature high humidity test of keeping a temperature of 85°C and a humidity of 85%RH for 2000 hours is performed, a yellowing degree (ΔYI) after the high temperature high humidity test is 10 or less.

**5.** The protective film according to claim 1 or claim 2, wherein the protective film includes a surface layer including a cured product of an electron beam curable resin composition on a surface of the protective layer that is opposite side to the adhesive layer.

**6.** The protective film according to claim 5, wherein the protective film includes a primer layer between the protective layer and the surface layer.

**7.** A structure comprising the protective film according to claim 1 or claim 2.

FIG. 1

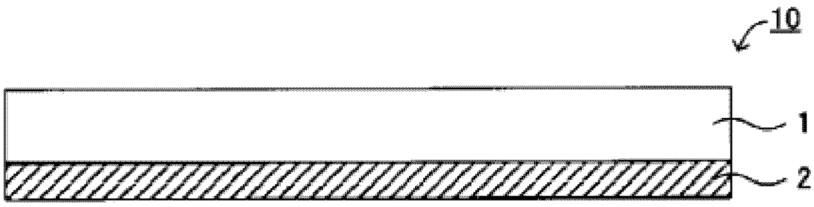


FIG. 2

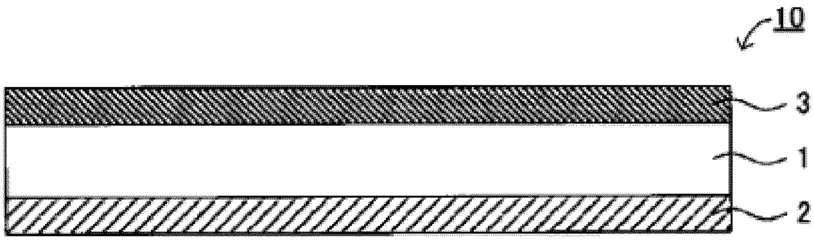

## INTERNATIONAL SEARCH REPORT

International application No.
**PCT/JP2023/024571**

**A. CLASSIFICATION OF SUBJECT MATTER**

***B32B 27/00***(2006.01)i; ***B32B 7/022***(2019.01)i; ***B32B 27/32***(2006.01)i; ***C09J 7/24***(2018.01)i
FI: B32B27/00 M; B32B7/022; B32B27/32 Z; C09J7/24

According to International Patent Classification (IPC) or to both national classification and IPC

**B. FIELDS SEARCHED**

Minimum documentation searched (classification system followed by classification symbols)

B32B1/00-43/00; C09J7/00-7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/065595 A1 (DAINIPPON PRINTING CO LTD) 08 April 2021 (2021-04-08) claims, paragraphs [0002], [0008], [0105], [0112], examples 1-3 | 1-7 |
| A | JP 4666541 B2 (NITTO DENKO CORP) 06 April 2011 (2011-04-06) entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/024571**

| Patent document cited in search report | Publication date (day/month/year) | Patent family member(s) | Publication date (day/month/year) |
| --- | --- | --- | --- |
| WO 2021/065595 A1 | 08 April 2021 | (Family: none) | |
| JP 4666541 B2 | 06 April 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010260942 A
- WO 2012102294 A